# EUROPÄISCHE PATENTANMELDUNG

(11) **EP 0 569 322 A1**
(43) Veröffentlichungstag der Anmeldung: **10.11.1993**
(21) Anmeldenummer: 93810240.7
(22) Anmeldetag: 05.04.1993
(51) Int. Cl.: G02B 6/38, H01R 13/639

(54) **Lösbare Kupplungsvorrichtung mit Trennsicherung**

(30) Priorität: 07.05.1992 CH 482/92
(71) Anmelder: Kupferdraht-Isolierwerk AG Wildegg, CH-5103 Wildegg (CH)
(72) Erfinder: Voser, Othmar, CH-5115 Möriken (CH)
(74) Vertreter: Bruderer, Werner

(57) **Zusammenfassung**

Ein Steckerteil (1) und ein Buchsenteil (2) bilden die Endstücke je eines Kabels (3, 4). Im Steckerteil (1) und im Buchsenteil (2) sind Kontaktelemente (6, 7) angeordnet, welche die Leiter der Kabel (3, 4) miteinander verbinden. Das Steckerteil (1) oder das Buchsenteil (2) weist einen flexiblen Mantel (8) mit einem Hohlraum (9) auf, welcher der Aufnahme des anderen Kupplungsteiles dient. Dieser Mantel (8) bildet die Trennsicherung, indem er in gekuppeltem Zustande die Stecker- und Buchsenteile (1, 2) zusammenhält und gegen unbeabsichtigtes Trennen sichert. Der Mantel (8) ist quer zur Kupplungsachse (5) elastisch aufweitbar und ermöglicht dadurch das Trennen und Zusammenfügen der Kupplungsteile (1, 2).

## Beschreibung

Die Erfindung betrifft eine lösbare Kupplungsvorrichtung mit Trennsicherung für elektrische und optische Leiter bestehend aus einem Steckerteil und einem Buchsenteil, welche zusammenwirkende Gegenstücke sind, wobei jedes der beiden Gegenstücke ein Endstück eines Kabels mit mindestens einem Leiter bildet und auf eine Kupplungsachse ausgerichtete Kontaktelemente enthält.

Kupplungsvorrichtungen dieser Art finden Verwendung an Steckverbindungen bei Verbindungsleitungen in der Datenkommunikation. Bekannte Anwendungsgebiete sind beispielsweise die Verbindungen zwischen Computern und Peripheriegeräten, Verbindungen zwischen Mess- und Steuerstellen sowie Prozessleitsystemen in der industriellen Steuerungstechnik, aber auch Verbindungen zwischen Sensoren oder Messgeräten und Ueberwachungssystemen, bzw. Anzeigegeräten in der Medizinaltechnik. Im Bereiche der elektronischen Datenverarbeitung ist es bekannt, beispielsweise Stecker mit seitlich angeordneten schwenkbaren Federverriegelungen auszustatten und am Buchsenteil entsprechende Gegenstücke anzubringen, in welche die Federn einrasten. Diese Kupplungsvorrichtungen für Datenkommunikationsleiter werden aus Metall hergestellt und müssen aus korrosionsfreiem Material bestehen. Insbesondere bei auf dem Boden liegenden Kupplungsvorrichtungen können die Federn durch die Rollen von mobilen Objekten oder durch darauf stehende Personen leicht beschädigt werden. Die Verbindung der Kupplungsvorrichtung ist dann nicht mehr sicher, und die beiden Leiterteile können sich leicht voneinander trennen. Dies kann bei Ueberwachungsaufgaben in der Industrie und insbesondere im Medizinaltechnikbereich zu Störungen führen, welche nicht akzeptiert werden können. Es ist auch bereits bekannt, Kupplungsvorrichtungen für Verbindungen zu Messensoren aus Kunststoff herzustellen. Dabei ist an einem Teil der Kupplung ein Bügel schwenkbar angeordnet, welcher bei zusammengestecktem Stecker- und Buchsenteil über die beiden Teile geschwenkt werden kann und an einer Schnappvorrichtung einrastet. Auch diese bekannte Ausführung kann leicht beschädigt werden wenn, wie oben erwähnt, die Kupplungsvorrichtungen auf dem Boden liegen oder anderweitig durch bewegte Objekte belastet werden. Zudem besteht bei häufigem Gebrauch die Gefahr, dass die Lagerungen der schwenkbaren Bügel brechen oder die Rasterelemente abgenutzt werden und dann die Sicherungswirkung des Bügels versagt. Bei Anwendungen im Medizinalbereich besteht zudem die Schwierigkeit, dass derartige Kupplungsvorrichtungen mit Trennsicherungen sterilisiert werden müssen. Bei den bekannten Kupplungsvorrichtungen ist dies nur in beschränktem Umfange möglich, da in den Lagerungen und in den Schnappvorrichtungen der schwenkbaren Elemente Vertiefungen und Ueberdeckungen vorhanden sind, welche nur beschränkt zugänglich sind, und in welchen sich Rückstände bilden können, welche nicht keimfrei zu halten sind.

Es ist Aufgabe der vorliegenden Verbindung, eine Kupplungseinrichtung mit Trennsicherung für elektrische und optische Leiter zu schaffen welche einfach handhabbar ist, eine grosse Sicherheit gegen unbeabsichtigtes Trennen der Kupplung aufweist, möglichst unempfindlich gegenüber Rollen oder Trittbelastungen durch Personen ist, und welche bei Anwendungen im medizinaltechnischen Bereich leicht desinfiziert oder sterilisiert werden kann.

Diese Aufgabe wird durch die im kennzeichnenden Teil des Patentanspruches 1 definierten Merkmale gelöst. Vorteilhafte Weiterbildungen der Erfindung ergeben sich nach den Merkmalen der abhängigen Patentansprüche.

Einer der Vorteile der Erfindung besteht darin, dass eines der Gegenstücke der Kupplungsvorrichtung, d.h. entweder das Steckerteil oder das Buchsenteil mit einem flexiblen Mantel ausgestattet ist, welcher einen integrierten Bestandteil dieses Gegenstückes bildet. Der flexible Mantel weist keine Scharniere, bewegliche Lagerungen oder Schnappeinrichtungen auf, sondern ist einstückig ausgebildet. Als Material für den flexiblen Mantel ist ein Elastomer, z.B. Polyurethan oder ein Material mit ähnlichen Eigenschaften, geeignet. Zweckmässigerweise ist es chemikalien- und hitzebeständig mindestens bis über die Sterilisationstemperatur für Medizinaltechnikgeräte hinaus. Ein weiterer Vorteil besteht darin, dass das Gegenstück welches in den Hohlraum des flexiblen Mantels passt und von diesem aufgenommen wird, keine zusätzlichen Einrichtungen wie Gegenhalter, Schnappleisten und dergleichen aufweisen muss. Beide Teile der Kupplungsvorrichtung, nämlich das Steckerteil und das Buchsenteil weisen eine möglichst einfache Form auf, wobei Hohlräume, unzugängliche Stellen und Teilbereiche welche nicht gereinigt werden können, praktisch vollständig vermieden sind. Trotzdem lässt sich die Aussenform der durch den Mantel gebildeten Trennsicherung formschön und griffsicher gestalten und an die unterschiedlichsten Formen von Stecker- und/oder Buchsenteilen anpassen. Das Kupplungsteil mit der Trennsicherung lässt sich in einfacher Weise in einem Arbeitsgang durch Umspritzen oder Umgiessen des Leiters mit den Kontaktelementen herstellen. Es sind keine zusätzlichen Montage- oder Anpassungsarbeiten notwendig, wodurch die erfindungsgemässe Kupplungsvorrichtung mit Trennsicherung sehr kostengünstig herstellbar ist. Ein unbeabsichtigtes Trennen der beiden Teile der Kupplungsvorrichtung aus der zusammengesteckten Position, in welcher der flexible Mantel beide Teile umfasst, wird bei Anwendung normaler Kräfte durch das bandförmige Hintergreifen des eingesteckten Teiles durch die vorderen Mantelteile verhindert. Trotzdem ist eine Trennung der Kupplungsvorrichtung relativ leicht möglich, indem die Endteile des Mantels welcher die Trennsicherung bildet, auf die Seite gedrückt werden und dann die beiden Teile der Kupplung auseinandergezogen werden können. Die erfindungsgemässe Kupplungsvorrichtung ist erheblich widerstandsfähiger gegen Beschädigung durch Ueberrollen oder Begehen als die bekannten Lösungen, und die Festigkeit des Mantels welcher die Trennsicherung bildet ist mindestens so gross wie die Festigkeit der übrigen Kupplungsvorrichtung.

Im folgenden wird die Erfindung anhand von Ausführungsbeispielen unter Bezugnahme auf die beiliegenden Zeichnungen näher erläutert. Es zeigen:
- Fig. 1: die Ansicht einer Kupplungsvorrichtung mit Trennsicherung bestehend aus Steckerteil und Buchsenteil in getrennter Position,
- Fig. 2: die Aufsicht auf den Steckerteil gemäss Figur 1 mit der seitlichen Aussparung,
- Fig. 3: eine Stirnansicht des Steckerteiles mit der Einführungsöffnung.

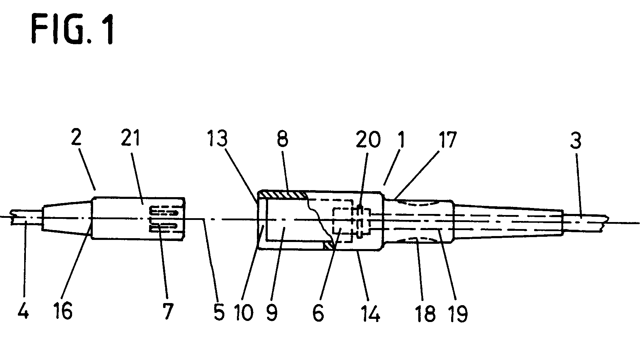

Die in Figur 1 dargestellte Kupplungsvorrichtung besteht aus zwei Gegenstücken, nämlich dem Steckerteil 1 und dem Buchsenteil 2. Sowohl Steckerteil 1 wie Buchsenteil 2 bilden die Endstücke von Kabeln 3 und 4. Diese Kabel 3, 4 können elektrische und/oder optische Leiter enthalten, welche mit den Kontaktelementen 6, bzw. 7 im Steckerteil 1, bzw. Buchsenteil 2 verbunden sind. Die Kontaktelemente 6 und 7 bilden in bekannter Weise formschlüssig ineinander greifende Gegenstücke, welche entlang der Kupplungsachse 5 ineinander geschoben werden können. Auf diese Weise wird die Verbindung zwischen den in den Kabeln 3 und 4 enthaltenen Leitern hergestellt. Das Steckerteil 1 besteht im hinteren Teil aus einem Gehäuse 17, welches den Endbereich 19 des Kabels 3 sowie das Verbindungsteil 20 zu den Kontaktelementen 6 umschliesst. Einstückig mit dem Gehäuse 17 ist ein Mantel 8 verbunden, welcher aus elastischem Material, im dargestellten Beispiel aus Polyurethan, besteht. Dieser Mantel 8 weist einen Hohlraum 9 auf, welcher etwa der Form des Gegenstückes, bzw. des Buchsenteiles 2, entspricht. Im vorderen Bereich des Hohlraumes 9 ist an der Stirnseite 13 des Mantels 8 eine Oeffnung 10 vorhanden, durch welche das Buchsenteil 2 in den Hohlraum 9 des Mantels 8 eingeschoben werden kann. In vollständig zusammengeschobener Position des Steckerteiles 1 und des Buchsenteiles 2 umschliesst der Mantel 8 den vorderen Bereich 21 des Buchsenteiles 2 und hintergreift diesen im Bereiche der Rückseitenflächen 16. Das Zusammenschieben des Steckerteiles 1 und des Buchsenteiles 2 ist möglich, weil der Mantel 8 aus elastischem Material besteht und dieses so gewählt wird, dass sich die Oeffnung 10 entsprechend elastisch aufweiten lässt. Nach vollständigem Zusammenschieben der beiden Gegenstücke 1 und 2 der Kupplungsvorrichtung nimmt der Mantel 8 wieder seine ursprüngliche Form ein und bildet durch Umschliessen des vorderen Bereiches 21 des Buchsenteiles 2 eine sichere formschlüssige Verbindung. Der Mantel 8 bildet somit eine Trennsicherung, welche weder Scharniere noch zusätzliche Klemmelemente aufweist und eine Verbindung zwischen den beiden Gegenstücken 1 und 2 ermöglicht, welche eine möglichst glatte Oberfläche aufweist.

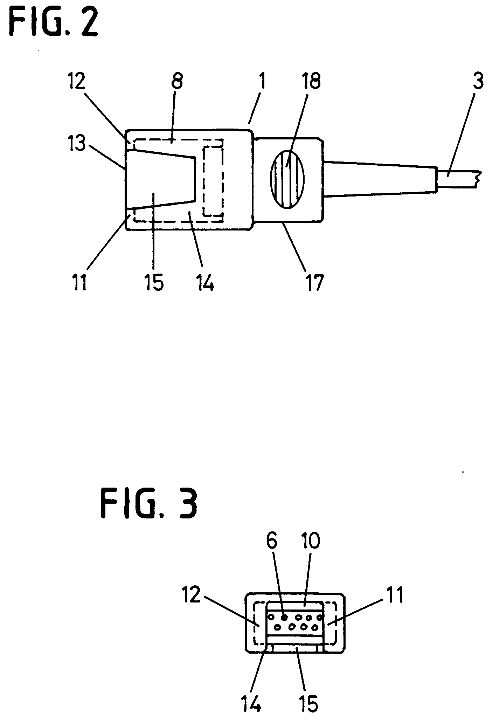

In Figur 2 ist eine Ausführungsvariante dargestellt, bei welcher zusätzlich zur Oeffnung 10 in der Stirnfläche 13 in der Seitenfläche 14 eine Aussparung 15 angeordnet ist. Die Form dieser Aussparung 15 ist so gewählt, dass sich der Hohlraum 9 des Mantels 8 besser aufweiten lässt und bei zusammengefügten Gegenstücken 1 und 2 das Buchsenteil 2 genügend umschlossen ist.

In Figur 3 ist eine Ansicht der Stirnseite 13 des Steckerteiles gemäss Figur 2 dargestellt, und es sind die seitlichen Halterungen 11 und 12 besonders gut erkennbar. Diese seitlichen Halterungen 11 und 12 hintergreifen die in Figur 1 beschriebene und dargestellte Rückseitenfläche 16 des vorderen Bereiches 21 des Buchsenteiles 2.

Es ist leicht ersichtlich, dass sich die beiden Gegenstücke 1 und 2 der Kupplungsvorrichtung mit dem die Trennsicherung bildenden Mantel 8, zum Beispiel bei Anwendung des bekannten Spritzgiessverfahrens, leicht an die unterschiedlichsten Formen und Anordnungen von Kontaktelementen 6, 7 sowie auch an verschiedene Arten und Formen von Kabeln 3, bzw. 4, anpassen lassen. Dabei bleibt die Funktion der Trennsicherung in jedem Falle vollumfänglich erhalten, und das elastische Material des Mantels 8 schützt die trenngesicherte Kupplungsvorrichtung vor Beschädigungen. Das Trennen von zusammengeschobenen Gegenstücken 1 und 2 der Kupplungsvorrichtung erfolgt in einfacher Weise durch Aufklappen der Halterungen 11 und 12 in seitlicher Richtung, so dass die formschlüssige Verbindung im Bereiche der Rückseitenflächen 16 des Buchsenteiles 2 gelöst wird. Da die erfindungsgemässe Kupplungsvorrichtung keine unzugänglichen Trennflächen und keine Scharniere oder Lagerungen aufweist, ist sie auch gemäss den Anforderungen an medizinaltechnische Geräte sterilisierbar.

## Patentansprüche

1. Lösbare Kupplungsvorrichtung mit Trennsicherung für elektrische und optische Leiter, bestehend aus einem Steckerteil (1) und einem Buchsenteil (2) welche zusammenwirkende Gegenstücke (1, 2) sind wobei jedes der beiden Gegenstücke (1, 2) ein Endstück eines Kabels (3, 4) mit mindestens einem Leiter bildet und auf eine Kupplungsachse (5) ausgerichtete Kontaktelemente (6, 7) enthält, dadurch gekennzeichnet, dass das Steckerteil (1) oder das Buchsenteil (2) einen flexiblen Mantel (8) aufweist, dieser Mantel (8) das eine der Gegenstücke (1) umschliesst und gleichzeitig einen an dieses Gegenstück (1) anschliessenden Hohlraum (9) umfasst, die Form dieses Hohlraumes (9) etwa der Form mindestens eines Teiles (21) des anderen Gegenstückes (2) entspricht und der Hohlraum (9) der Aufnahme dieses Teiles (21) des anderen Gegenstückes (2) dient, der Mantel (8) eine Oeffnung (10) für die Einführung des anderen Gegenstückes (2) in den Hohlraum (9) aufweist, der Mantel (8) im Bereiche dieser Oeffnung (10) quer zur Kupplungsachse (5) elastisch aufweitbar ist und mindestens Teile des Mantels (8) in einem Bereiche zwischen Kabel (4) und Kontaktelementen (7) des anderen Gegenstückes (2) lösbare Halterungen (11, 12) für dieses Gegenstück (2) bilden.

2. Kupplungsvorrichtung nach Patentanspruch 1, dadurch gekennzeichnet, dass die Oeffnung (10) für die Einführung des anderen Gegenstückes (2) in den Mantel (8) in der, rechtwinklig zur Kupplungsachse (5) stehenden, Stirnfläche (13) des Mantels (8) angeordnet ist.

3. Kupplungsvorrichtung nach Patentanspruch 1 oder 2, dadurch gekennzeichnet, dass in mindestens einer, an die Stirnfläche (13) des Mantels (8) angrenzenden Seitenfläche (14) eine Aussparung (15) angeordnet und diese Aussparung (15) mit der Oeffnung (10) verbunden ist.

4. Kupplungsvorrichtung nach einem der Patentansprüche 1 bis 3, dadurch gekennzeichnet, dass die Teile des Mantels (8) welche Halterungen (11, 12) bilden einen Teil der Rückseitenfläche (18) des anderen Gegenstückes (2) hintergreifen.

5. Kupplungsvorrichtung nach einem der Patentansprüche 1 bis 4, dadurch gekennzeichnet, dass der Mantel (8) aus einem dauerelastischen Material gefertigt ist.
